# EUROPÄISCHE PATENTSCHRIFT

(11) **EP 3 589 838 B1**
(45) Veröffentlichungstag und Bekanntmachung des Hinweises auf die Patenterteilung: **04.11.2020**
(21) Anmeldenummer: 18700096.3
(22) Anmeldetag: 05.01.2018
(51) Int. Cl.: F03D 17/00, F03D 80/50

(54) **INSPEKTIONSGERÄTSTEUERUNGSEINRICHTUNG FÜR EIN INSPEKTIONSGERÄT EINER WINDKRAFTANLAGE**
INSPECTION DEVICE CONTROLLER FOR AN INSPECTION DEVICE OF A WIND POWER PLANT
DISPOSITIF DE COMMANDE D'APPAREIL D'INSPECTION D'UN APPAREIL D'INSPECTION D'UNE ÉOLIENNE

(30) Priorität: 03.03.2017 DE 102017104490
(43) Veröffentlichungstag der Anmeldung: 08.01.2020
(73) Patentinhaber: Innogy SE, 45128 Essen (DE)
(72) Erfinder: ROSEN, Johannes, 45481 Mülheim (DE)
(74) Vertreter: Cohausz & Florack
(86) Internationale Anmeldenummer: PCT/EP2018/050237
(87) Internationale Veröffentlichungsnummer: WO 2018/157980

(56) Entgegenhaltungen:
- EP-A1- 2 940 298
- EP-A1- 3 109 716
- WO-A1-2017/010206
- DE-A1-102013 113 326

## Beschreibung

Der Gegenstand betrifft eine Inspektionsgerätsteuerungseinrichtung für ein Inspektionsgerät einer Windkraftanlage, ein Inspektionsgerät für eine Windkraftanlage sowie ein Verfahren zum Betreiben einer Inspektionsgerätsteuerungseinrichtung.

Während des Betriebs von Windkraftanlagen, insbesondere im Offshore-Bereich, können Schäden, insbesondere an den Rotorblättern der Windkraftanlagen auftreten. Um diese Schäden frühzeitig entdecken zu können, wird bisher neben einer manuellen Kontrolle auch eine Kontrolle mittels Flugdrohnen angewendet. Bei der manuellen Kontrolle wird die Windkraftanlage abgeschaltet, Techniker beklettern die Windkraftanlage oder es wird mit Hilfe von Teleskopen und Videokameras eine Aufnahme der Rotorblätter durchgeführt. Dies ist gerade bei Offshore-Anlagen problematisch, da für den Überstieg von Personal ein ruhiger Seegang notwendig ist und die Positionierungsmöglichkeiten und damit die Sichtachsen von Teleskopen oder Videokameras eingeschränkt sind.

Fliegende Inspektionsplattformen, wie beispielsweise Flugdrohnen, bieten Vorteile gegenüber der manuellen Inspektion insbesondere wegen ihrer größeren Freiheitsgrade und Geschwindigkeiten bei der Bewegung im Raum. Jedoch müssen die fliegenden Inspektionsplattformen i.d.R. manuell gesteuert werden. Die Inspektionen erfolgen in der Regel bei ruhigem Wetter, d.h. bei eher geringen Windgeschwindigkeiten. Bei stärkerem Wind wird in der Regel die Aufnahmequalität beeinträchtigt sowie die Flugzeit herabgesetzt oder die Inspektion abgebrochen.

Das Anfliegen der Windkraftanlage erfolgt zumeist manuell, wobei häufig aufgrund der Umweltbedingungen die Aufnahmen nicht brauchbar sind. Insbesondere wenn zu starke oder zu schwache Kontraste zwischen dem Himmel und der Oberfläche des Rotorblattes bestehen oder der Sonnenstand schlecht ist (z.B. bei Gegenlicht) bzw. auch Wolken oder Nebel vorhanden sind, können die Aufnahmen nicht mit ausreichender Qualität erstellt werden. Daher ist die Aufnahmequalität stark abhängig von den individuellen Kenntnissen und Fähigkeiten des Bedieners, der die Inspektionsplattform steuert.

In aller Regel wird die Windkraftanlage für die Zeitdauer der Inspektion abgeschaltet. Eine Inspektion bei laufender Windkraftanlage stellt den Bediener der fliegenden Inspektionsplattform vor große Herausforderungen. Dieser muss die Inspektionsplattform stets in einem richtigen Abstand zu der Windkraftanlage halten und dabei den Auslösezeitpunkt beispielsweis einer Kamera möglichst optimal timen. Auch kann jeweils ein Bediener nur eine fliegende Inspektionsplattform betreiben, so dass der personelle Aufwand für die Inspektion der Windkraftanlagen erheblich ist. Die WO 2017/010206 A1 offenbart ein Verfahren zum Befestigen eines Flügels eines Rotors einer Windkraftanlage, der horizontal ausgerichtet werden soll.

Die EP 3 109 716 A1 beschreibt ein Verfahren zur Diagnose der Bauelemente des Windparks, das dadurch gekennzeichnet ist, dass die Inspektion des Windparks autonom durchgeführt wird.

Aus diesem Grunde lag dem Gegenstand die Aufgabe zugrunde, die Inspektion von Windkraftanlagen hinsichtlich ihrer Aufnahmequalität als auch der möglichen Einsatzzeiten zu optimieren.

Diese Aufgabe wird durch ein Inspektionsgerätesteuerungseinrichtung nach Anspruch 1 sowie ein Verfahren nach Anspruch 10 gelöst.

Gegenständlich wird vorgeschlagen, dass sowohl eine Kommunikation mit einer Anlagensteuerung als auch eine Kommunikation mit einem Inspektionsgerät, insbesondere von einer zentralen Stelle aus durchgeführt werden kann. Diese zentrale Stelle, die Inspektionsgerätesteuerungseinrichtung kann auch als Leitstand oder einer Leitwarte verstanden werden. Die Inspektionsgerätesteuerungseinrichtung muss nicht notwendigerweise komplett zentralisiert sein. Sie kann auch dezentral auf festen und/oder mobilen Einheiten, z.B. Windkraftanlagen, Schiffen, Umspannwerk, dem Inspektionsgerät selbst, etc. verteilt sein.

Über die Anlagenschnittstelle können Anlagenparameter der Windkraftanlage empfangen werden. Solche Anlagenparameter können beispielsweise Azimutwinkel, Nabenwinkel, Pitchwinkel, Rotorblattgeometrie, Geometrie der Windkraftanlage, CAD-Daten der Windkraftanlage, Drehgeschwindigkeit der Nabe und/oder Positionierung der Windkraftanlage in einem Windpark oder dergleichen sein. Mit Hilfe dieser Anlagenparameter lässt sich gegenständlich das Inspektionsgerät steuern, in dem abhängig von den Anlagenparametern Steuerungsinformationen (Steuerungsdaten) für das Inspektionsgerät erstellt und über die Geräteschnittstelle ausgegeben werden. Die Inspektionsgerätsteuerungseinrichtung kann auch den Betrieb der Windkraftanlage steuern und/oder den Betrieb von Inspektionsgerät und Windkraftanlage aufeinander abstimmen.

Steuerungsinformationen für das Inspektionsgerät können insbesondere Flugwege, Zielkoordinaten, Flugzeiten, Ausrichtungsinformationen, Betriebsinformationen für Sensoren, Abstandsinformationen oder dergleichen sein. Steuerungsinformationen für die Windkraftanlage können insbesondere deren Azimutwinkel, Nabenwinkel oder Pitchwinkel sein.

Im Nachfolgenden werden weitere Anlagenparameter als auch Steuerungsinformationen und/oder. Betriebsparameter beschrieben werden, welche ebenfalls allesmat für die gegenständliche Einrichtung eingesetzt werden können.

Mit Hilfe des gegenständlichen Verfahrens ist es möglich, für bestimmte Schäden an einer Windkraftanlage, insbesondere an einem Rotorblatt, eine bestmögliche Klassifizierung zu ermöglichen. Hierzu können im Zuge einer laufenden Inspektion nahezu in Echtzeit detektierte, möglicherweise schadhafte Areale begutachtet werden. Dabei lässt sich durch die Steuerungsinformationen insbesondere die Positionierung des Inspektionsgerätes relativ zur Windkraftanlage automatisch einstellen und so gezielt Beleuchtungssituationen herstellen, die eine bestmögliche Klassifizierung eines möglichen Schadens ermöglichen.

Gegenständlich sind die Steuerungsinformationen insbesondere derart, dass das Inspektionsgerät bevorzugt auf der Luvseite der Windturbine bzw. des jeweiligen Rotorblatts betrieben wird. Hierzu wird die Positionierung und Steuerung des Inspektionsgeräts relativ zur Windturbine auf einem Flugpfad berechnet, wobei der Flugpfad in den Steuerungsinformationen enthalten ist. Durch Kenntnis des Anlagenstandortes und der Windrichtung sowie eine entsprechende Berechnung des Flugpfades kann sichergestellt werden, dass sich das Inspektionsgerät auf der Luvseite der Windturbine befindet. Hierdurch kann sichergestellt werden, dass das Inspektionsgerät nur vergleichsweise geringeren Turbulenzen ausgesetzt ist. Durch geeignete Steuerung des Inspektionsgerätes lässt sich ein Rotorblatt insbesondere entlang beider Blattkanten, d.h. der Vorderblattkante und der Hinterblattkante inspizieren.

Durch die automatische oder teilautomatische Steuerung anhand der Steuerungsinformationen lässt sich die Flugzeit und/oder der Flugweg (Flugstrecke) optimieren und/oder der Personaleinsatz minimieren.

Mit Hilfe der Steuerungsinformationen ist es möglich, mit dem Inspektionsgerät während eines Inspektionsgangs zumindest ein, vorzugsweise alle Rotorblätter zumindest einer Anlage zu inspizieren. Hierzu wird mit Hilfe der Steuerungsinformationen eine Flugstrecke und/oder Flugzeit berechnet, die notwendig ist, um ein bzw. mehr als ein Rotorblatt einer bzw. mehrerer Anlagen zu inspizieren.

Durch eine automatische Variation von Anlagenparametern (über die Steuerungsinformationen für die Windkraftanlage) ist es möglich, die Windkraftanlage optimal für einen Inspektionsganz auszurichten. Eine optimal ausgerichtete Windkraftanlage ermöglicht es, die Flugzeit für die Inspektion eines oder mehrerer Rotorblätter zu minimieren und somit die Anzahl der Inspektionen pro Inspektionsgang, insbesondere pro Flug zu vergrößern. Insbesondere können Anlagenparameter der Windkraftanlage derart eingestellt werden, dass die Windkraftanlage eine derartige relative Ausrichtung zur Sonnen- und/oder zur Windrichtung hat, dass ein an dem Inspektionsgerät angeordneter Sensor (insbesondere eine Kamera) optimierte Aufnahmeverhältnisse vorfindet. Die Windkraftanlage kann dabei stillstehen, im Taumelbetrieb oder im Normalbetrieb laufen. Insbesondere können die Rotorblätter der Windkraftanlage in eine Fahnenstellung gebracht werden.

Die Steuerungsinformationen ermöglichen es, nicht nur die Flugstrecke an die aktuell geltenden Randbedingungen, insbesondere die aktuell geltenden Anlagenparameter anzupassen, sondern auch, Tank-/Ladestopps und dergleichen einzuplanen. Dabei kann eine Flugstrecke so berechnet werden, dass die Flugzeit optimal genutzt wird und das Inspektionsgerät zum Ende der Flugzeit an eine Tank-/Ladestation bewegt wird, um dort für den nächsten Inspektionsgang aufgeladen zu werden.

Gegenständlich wird vorgeschlagen, dass eine Anlagenschnittstelle zur Kommunikation mit einer Windkraftanlagensteuerung der Windkraftanlage geeignet ist. Über die Anlagenschnittstelle können Anlagenparameter der Windkraftanlage in die gegenständliche Inspektionsgerätesteuerungseinrichtung gespeist werden. Auch ist es möglich, dass über die Anlagenschnittstelle Anlagenparameter (als Steuerungsinformationen) für die Windkraftanlage ausgegeben werden. Anlagenparameter können beispielsweise Windturbinenparameter, wie beispielsweise der Azimutwinkel, der Pitchwinkel, der Rotordrehwinkel und/oder die Winkelgeschwindigkeit der Rotornabe sein.

Die Anlagenparameter können manuell oder per Datenschnittstelle eingelesen werden. Insbesondere eine Verbindung zu einem SCADA System ist möglich. Die Anlagenschnittstelle als auch die Geräteschnittstelle kann eine drahtgebundene oder drahtlose Schnittstelle sein, insbesondere eine Datenfunk-Schnittstelle (Telemetrie), eine WLAN-Schnittstelle oder eine Bluetooth-Schnittstelle.

Für den Fall eines Ausfalls einer Datenverbindung oder das Fehlen von Anlagenparametern ist es möglich, dass eine Bestimmung des Azimutwinkels, des Pitchwinkels und/oder des Rotordrehwinkels durch das Inspektionsgerät erfolgt. Dies kann beispielsweise durch optische oder sonstige Markierungen, insbesondere Reflektoren erfolgen. Auch ist es möglich, dass ein Rotorblatt optisch oder sonstig codiert ist und hierüber eine automatische Ausrichtung des Inspektionsgerätes an einem Rotorblatt, z.B. mittels bildgebender Verfahren, z.B. Stereoskopieoder anderer Positionierhilfen (Sonar, Radar, Laser, Laserscanner, optischer Fluss, etc.) erfolgt. Markierungen können an jeweils einem Rotorblatt, der Nabe, der Gondel und/oder dem Turm angeordnet sein. Über ein bildgebendes Verfahren können diese Markierungen bzw. Reflektoren ausgewertet werden. Die hieraus gewonnenen Anlagenparameter können in die Anlagenschnittstelle eingespeist werden.

Mit Hilfe der Steuerungsinformationen ist es möglich, die Flugstrecke bzw. die Inspektionsstrecke des Inspektionsgerätes einzustellen. Es hat sich herausgestellt, dass eine Inspektionsstrecke parallel zu einer die Rotordrehebene, insbesondere im Nabenmittelpunkt schneidenden Gerade vorteilhaft ist. Das Inspektionsgerät erhält mit den Steuerungsinformationen eine Information dazu, wie es sich parallel zur Rotordrehebene bewegen kann.

Insbesondere können die Steuerungsinformationen Informationen enthalten, dass sich das Inspektionsgerät entlang eines Rotorradius oder Rotordurchmessers parallel zur Rotordrehebene bewegt. Insbesondere kann die Bewegung entlang des gesamten Durchmessers, also von Blattspitze zur Blattspitze verlaufen. Hierdurch kann sich bei drehendem Rotor und entsprechendem Lichteinfall, die Flugstrecke pro Anlage auf eine Rotorlänge begrenzen. Für eine Aufnahme der Vorder- und Rückseite des Rotorblattes müsste aber die Kamera an jeder Aufnahmeposition entlang des Radius abwechselnd schräg nach oben und anschließend schräg nach untern ausgerichtet werden. Alternativ kann das Inspektionsgerät zwei Aufnahmesensoren aufweisen, deren optischen Achsen winklig zueinander sind. Dabei wird jeweils die Saugseite oder die Druckseite eines Blattes und komplementär dazu die Druck- oder die Saugseite eines benachbarten Blattes aufgenommen.

Bei drehendem Rotor kann das Inspektionsgerät somit eine oder mehrere Vollumdrehungen des Rotors an einer Position verharren und somit jede einzelne Rotorblattkante inspizieren. Durch ein Versetzen der Position kann ein neuer Bereich der Blattkanten inspiziert werden. In einem ersten Halbdurchmesser, d.h. beispielsweise in einem ersten Kreissegment kann das Inspektionsgerät auf der Druckseite eine oder beide Blattkanten sowie die Blattoberfläche eines oder mehreren Rotorblätter inspizieren. Bewegt sich das Inspektionsgerät nunmehr auf die andere Seite, d.h. den anderen Halbdurchmesser bzw. das andere Kreissegment, kann das Inspektionsgerät dann die jeweils andere Rotorblattoberfläche (Saugseite) sowie die Blattkanten von der jeweils anderen Seite inspizieren. Insbesondere verläuft die Flugstrecke versetzt zur Linie des Rotordurchmessers. Abhängig von der für die Aufnahme günstigsten lokalen Ausrichtung der Rotorblattoberfläche können die Aufnahmen an unterschiedlichen Positionen entlang des Rotorradius bei jeweils unterschiedlichen Nabenwinkeln erfolgen, wobei die Aufnahmeeinheit und die Aufnahmeparameter (z.B. Zoom) entsprechend nachgeführt werden können.

Die Bewegung des Inspektionsgerätes kann entlang einer Ebene parallel zur Rotordrehebene verlaufen. In einem ersten Halbdurchmesser wird von dieser Ebene aus eine erste Blattseite inspiziert und auf der anderen Halbebene wird von derselben Ebene heraus eine Inspektion der jeweils gegenüber liegenden Blattseite möglich. Mit Hilfe dieses Flugweges ist es möglich, mit einer möglichst geringeren Wegstrecke beide Blattseiten ausgehend von einer Beobachtungsebene auf der Luvseite zu inspizieren.

Die Steuerungsinformationen können auch Informationen zu Inspektionszeiten beinhalten. Insbesondere kann festgelegt werden, zu welchen Zeiten ein Inspektionsgerät die Windkraftanlage inspiziert. Die Zeiten können beispielsweise abhängig von einer Wettervorhersage und der Vorhersage eines Strompreises sein. Dadurch kann mit Hilfe der Steuerinformationen eine Einsatzplanung derart erfolgen, dass die Inspektion zu Zeiten durchgeführt wird, in denen der Strompreis einen unteren Schwellenwert unterschreitet. Da die Inspektion vorzugsweise nicht dann durchgeführt wird, wenn die Windkraftanlage unter Volllast arbeitet, beispielsweise beim Trudeln der Windkraftanlage, kommt es bei Windgeschwindigkeiten oberhalb der Einschaltwindgeschwindigkeit zu einem Mindererlös, da die zur Verfügung gestellte Leistung kleiner ist, als sie sein könnte. Durch eine Kopplung des Inspektionseinsatzes an eine Entwicklung eines Strompreises kann ein Mindererlös verringert werden.

Windkraftanlagen verfügen in der Regel über eigene Kommunikationsgeräte, beispielweise über Glasfaseranbindungen, WLAN, Mobilfunk- und/oder Richtfunkeinrichtungen. Mit diesen ist eine bidirektionale oder unidirektionale Kommunikation mit dem Inspektionsgerät möglich. Bei einer Flugstrecke entlang verschiedener Windkraftanlagen kann ein Hand-off zwischen den verschiedenen Kommunikationsinfrastrukturen realisiert sein. Somit ist es möglich, dass das Inspektionsgerät entlang einer Flugstrecke über verschiedene Kommunikationseinrichtungen verschiedener Windkraftanlagen kommuniziert. Das Hand-off kann dabei positionsabhängig und /oder zeitlich koordiniert erfolgen. Somit lassen sich Reichweitenbegrenzungen der jeweils an einer Windkraftanlage angeordneten Kommunikationseinrichtungen überwinden, da die Kommunikation jeweils von einer anderen Kommunikationseinrichtung einer anderen Windkraftanlage übernommen werden kann. Die Kommunikationsstrecke ermöglicht insbesondere auch den Austausch von Steuerungsinformationen, Anlagenparametern, Betriebsparametern, Sensordaten sowie anderen Informationen. Dabei können auch Abdeckungslücken zwischen einzelnen Windkraftanlagen (z.B. bei WLAN) auftreten. Diese können durch einen autonomen Flug bis zum Einflug in die WLAN-Reichweitenzone einer nächsten Windkraftanlage überbrückt werden. Auch lässt sich durch die Ausnutzung verschiedener Kommunikationsgeräte / -techniken eine redundante Datenübertragung realisieren.

Gemäß einem Ausführungsbeispiel wird vorgeschlagen, dass die Anlagenschnittstelle zum Empfangen von Anlagenparametern der Windkraftanlage eingerichtet ist. Auch wird vorgeschlagen, dass der Prozessor abhängig von zumindest den Anlagenparametern die Steuerungsinformationen erstellt.

Es ist sinnvoll, die Beleuchtungssituation bei einer Inspektion, beispielweise eine Streiflichtsituation oder dergleichen, vorab bestimmen zu können. Dies ist insbesondere dann möglich, wenn vorab eine Kenntnis über Anlagenparameter, insbesondere den Azimutwinkel, den Pitchwinkel und/oder den Rotorwinkel besteht oder die Anlagenparameter entsprechend eingestellt werden können. Auch kann eine Kenntnis der Geometrie der Rotorblätter, der Gondel oder der gesamten Windkraftanlage sinnvoll sein. Mit Hilfe der Information über eine aktuelle Ausrichtung der Rotorblattoberfläche an einem Punkt des Rotorblattes kann beispielsweise im Zusammenspiel mit einer Sonnenposition bzw. der relativen Position der Sonne und deren Ausrichtung und Lichtstärke eine entsprechende Positionierung des Inspektionsgerätes bestimmt werden. Auch kann eine Ausrichtung sowie weitere Aufnahmeparameter (z.B. Brennweite, Belichtungszeit, Blende, etc.) eines Sensors, beispielsweise einer Kamera, des Inspektionsgerätes abhängig von den Anlagenparametern erfolgen.

Auch ist es möglich, dass an einer Anlage eine künstliche Lichtquelle angeordnet ist, deren Position, Ausrichtung und Lichtstärke beeinflussbar ist. Auch eine solche künstliche Lichtquelle kann mit Hilfe von Anlagenparametern gesteuert werden. Auch können diese Anlagenparameter genutzt werden, um die Steuerungsinformationen zu erstellen. Mit Hilfe der Steuerungsinformationen wird das Inspektionsgerät derart zu der Windkraftanlage positioniert, dass eine möglichst gute, sensorbasierte Inspektion möglich ist. Die Lichtquelle kann auch von einer weiteren Plattform (ortsfest, fahrend, fliegend oder schwimmend) aus eingesetzt werden. Dabei können die Anlagenparameter neben der Ausrichtung der Lichtquelle auch zur Positionierung bzw. Bewegung der weiteren Plattform genutzt werden. Ebenso kann eine koordinierte Bewegung / Ausrichtung der Lichtquelle und dem Inspektionsgerät sowie deren Sensoren erfolgen. Bei bedarfsgerechter Ausrichtung der künstlichen Lichtquelle können somit auch geeignete Wetterfenster in der Dunkelheit bzw. Dämmerung genutzt werden, wodurch sich die Auswahl an ertragsverlustbegrenzenden Inspektionszeitpunkten vergrößert.

Sind die Anlagenparameter bekannt, kann beispielsweise auch die jeweilige Position eines Rotorblattes zu einer bestimmten Zeit bestimmt werden. In Kenntnis der Rotorblattposition zu einer bestimmten Zeit ist es auch möglich, Aufzeichnungen von an dem Inspektionsgerät angeordneten Sensoren einzelnen Rotorblättern zuzuordnen. So können beispielsweise Einzelaufnahmen einem jeweiligen Rotorblatt zugeordnet werden.

Wenn die Aufnahmen eines Sensors mit einem Zeitstempel versehen sind, kann dieser Zeitstempel mit Anlagenparametern verglichen werden. Hierbei kann z.B. die Rotorblattposition, die jeweils auch einem Zeitstempel zugeordnet ist, ermittelt werden, und so eine Aufnahme einem Rotorblatt zugeordnet werden. Somit lässt sich eine Zuordnung einer Einzelaufnahme zu jeweils einem Rotorblatt auch im Nachhinein durchführen.

Anlagenparameter können unterschiedlich sein, ob die Anlage in Betrieb ist oder nicht. Insbesondere die Geometrie der Rotorblätter kann im belasteten Zustand anders sein als im unbelasteten Zustand. Neben der Kenntnis der Geometrie im unbelasteten Zustand als Anlagenparameter kann auch die Geometrie im belasteten Zustand als Anlagenparameter zur Verfügung gestellt werden. Blattvorspannung und/oder Blattdurchgang als Funktion des Rotordrehwinkels und des Pitchwinkels können dabei sowohl im unbelasteten als auch im (teil-)belasteten Zustand als Anlagenparameter zur Verfügung gestellt werden. Insbesondere die Durchbiegung eines Rotorblatts von der Nabe bis zur Rotorblattspitze kann bei sich drehendem Rotor als Anlagenparameter zur Verfügung gestellt werden.

Insbesondere können diese Daten in Echtzeit für eine Abstandsermittlung genutzt werden. Insbesondere können Anlagenparameter aus einem CMS-System der Windkraftanlage, insbesondere einem CMS-System für das Rotorblatt ermittelt werden. Da sich ein Rotorblatt im belasteten Zustand durchbiegt, muss der Abstand des Inspektionsgerätes zu dem Rotorblatt und/oder die Einstellung des Aufnahmesensors ggf. an die Belastungssituation angepasst werden. Dies erfolgt vorzugsweise mit Hilfe der Anlagenparameter, aus denen die Steuerungsinformationen erstellt werden.

Gemäß einem Ausführungsbeispiel wird vorgeschlagen, dass die Geräteschnittstelle zum Empfangen von Betriebsparametern des Inspektionsgerätes eingerichtet ist und dass der Prozessor abhängig von zumindest den Betriebsparametern die Steuerungsinformationen erstellt. Somit ist es möglich, beispielsweise abhängig von aktuellen Betriebsparametern die Steuerungsinformationen anzupassen. Auch können Betriebsparameter beispielsweise ein Energiespeicherzustand des Inspektionsgerätes sein und abhängig hiervon kann beispielsweise eine Einsatzplanung für das Inspektionsgerät erfolgen. Die Übertragungen der Betriebsparameter kann beispielsweise ausgehend von einem Leitstand oder einer Windfarmüberwachung durchgeführt werden. Auch eine Leitwarte ermöglicht es, Betriebsparameter an das Inspektionsgerät zu übermitteln und gegebenenfalls Betriebsparameter und/oder Sensordaten zu empfangen.

Insbesondere bei sich verändernden Umweltbedingungen kann es notwendig sein, Steuerungsinformationen automatisch hieran anzupassen. Insbesondere können veränderte Umweltbedingungen zu nicht vorhersagbaren Betriebszuständen des Inspektionsgerätes führen. Diese Betriebszustände können ausgewertet werden. Gegebenenfalls müssen neue Steuerungsinformationen an das Inspektionsgerät übermittelt werden.

Gemäß einem Ausführungsbeispiel wird vorgeschlagen, dass die Inspektionsgerätesteuereinrichtung zum Empfangen von Umweltdaten eingerichtet ist und dass der Prozessor abhängig von zumindest den Umweltdaten die Steuerungsinformationen erstellt.

Zunächst kann eine Einsatzplanung beispielsweise wetterunabhängig sein. Durch Auswertung von Umweltdaten, insbesondere von Wetterdaten ist es möglich, die Einsatzplanung wetterabhängig zu machen, insbesondere abhängig vom Wetter Einsatzzeiten zu definieren.

Umweltdaten können insbesondere Sonnenposition, Sonnenstand, Strahlungsintensität, Bewölkungsinformationen, Windrichtung, Windstärke, Turbulenzinformationen, Böenintensität, Temperatur, Niederschlag und/oder Sichtweite sowie dergleichen sein. Umweltdaten können Einfluss auf die Flugzeitplanung als auch die Flugwegplanung nehmen. Mit Hilfe der Umweltdaten können Steuerungsinformationen errechnet werden.

Es ist beispielsweise möglich, mittels gängiger Wettergrößen, wie beispielsweise Windstärke, Windrichtung, Windgeschwindigkeit, Böenintensität und/oder Bewölkung sowie Informationen zur Tageszeit, woraus sich ein Sonnenstand errechnen lässt, die Steuerungsinformationen zu bestimmen. Insbesondere können eine Einsatzplanung und/oder eine Integration in die Produktions- und Arbeitsplanung der Windkraftanlage oder des gesamten Windparks erfolgen. Beispielsweise können Einsatzplanungen zu Zeiten erfolgen, in denen eine Flaute vorhergesagt ist, in welchem Fall die Windkraftanlagen ohnehin nicht in Betrieb sind. Andererseits kann auch eine Einsatzplanung dahingehend erfolgen, dass nur bis zu einer Windgeschwindigkeit unterhalb eines Grenzwertes eine Inspektion erfolgt.

Durch die Einsatzplanung abhängig von den Umweltdaten ist es möglich, die Windkraftanlagen insbesondere die Rotorblätter in erweiterten Wetterfenstern zu inspizieren. Insbesondere kann die Inspektionsdauer verkürzt werden, da die Einsatzplanung auch insbesondere abhängig von der Beleuchtungssituation ist und dadurch gewährleistet werden kann, dass die Aufnahmequalität ausreichend gut ist. Dies führt zu einer Minimierung des Anlagenstillstands.

Die Umweltdaten können beispielsweise manuell oder per Datenschnittstelle, insbesondere aus einem SCADA-System, insbesondere drahtgebunden oder drahtlos zur Verfügung gestellt werden.

Mit Hilfe der Umweltdaten ist insbesondere eine Windrichtung bestimmbar. Dadurch ist es möglich, die Flugwegplanung derart einzustellen, dass das Inspektionsgerät im Luv der laufenden Anlage betrieben wird. Durch den Betrieb im Luv der laufenden Anlage können Turbulenzen am Inspektionsgerät vermieden bzw. verringert werden. Das Betreiben des Inspektionsgerätes im Luv der laufenden Anlage kann ein Betrieb auf der Druckseite bedeuten.

Durch Kenntnis der Windrichtung und somit der Positionierung des Inspektionsgerätes relativ zum Rotor kann auch eine Blickrichtung eines Sensors eingestellt werden. Insbesondere ist es möglich, das Inspektionsgerät entgegen der Windrichtung anzutreiben, so dass seine Position relativ zur Windkraftanlage fest ist. Dann kann eine Sensorposition, insbesondere eine Kameraposition nach schräg hinten und oder unten bzw. oben gerichtet sein. Auch ist eine Aufnahme mit mehr als einem Sensor, beispielsweise zwei Sensoren, beispielsweise zwei Kameras möglich. Die Sensoren können auch auf zwei Inspektionsgeräte verteilt sein.

Gemäß einem Ausführungsbeispiel werden nicht nur die Steuerungsinformationen, sondern auch die Anlagenparameter abhängig von dem Umweltdaten beeinflusst. Somit ist es beispielsweise möglich, abhängig von den Umweltdaten, insbesondere von Windrichtung, Windstärke, Turbulenzintensität und/oder Sonnenstand den Azimutwinkel und/oder den Pitchwinkel der Windkraftanlage einzustellen. Diese Einstellung kann vorzugsweise in einem definierten und/oder zulässigen Bereich erfolgen.

Durch Ausrichtung der Windkraftanlage abhängig von den Umweltdaten kann eine entsprechende Ausrichtung zu einer Beleuchtungsquelle, beispielsweise der Sonne erfolgen. Somit ist es möglich, Anlagenparameter abhängig von den Umweltdaten einzustellen. Ferner können abhängig von den eingestellten Anlageparametern und den Umweltdaten die Steuerungsinformationen bestimmt werden. So kann beispielsweise eine Wegstrecke des Inspektionsgerätes so eingestellt werden, dass es relativ zu der Windkraftanlage so bewegt wird, dass eine Beleuchtung des Rotorblattes, insbesondere einer Blattkante und/oder Blattoberfläche optimiert ist. Darüber hinaus ist in Kenntnis der Beleuchtungsintensität eine Belichtungsdauer beispielsweise einer Kamera einstellbar. Ferner ist beispielsweise in Kenntnis eines Abstandes zu einer Windkraftanlage in den Steuerungsinformationen auch ein Zoom bzw. ein Kameraaufnahmewinkel oder ein Autofocus einstellbar.

Auch wird vorgeschlagen, dass Umweltdaten nicht nur an einer Windkraftanlage, sondern beispielsweise auch an entfernt von der Windkraftanlage angeordneten Messeinrichtungen, beispielsweise von Windmessmasten, Bojen- oder gondelbasiertem LIDAR in der Nähe der zu inspizierenden Windkraftanlage erfasst werden. Eine Übermittlung solcher Umweltdaten kann beispielsweise über WLAN, UHF, VHF, Mobilfunk, Richtfunk oder dergleichen erfolgen. Auch kann ein Relaying der Daten zwischen verschiedenen Windkraftanlagen derart erfolgen, dass die Wetterdaten von Windkraftanlage zu Windkraftanlage übertragen werden, um dann bei der Zielwindkraftanlage anzulangen und dort ausgewertet werden zu können. Auch können solche Informationen über Glasfaserkabel zwischen den Windkraftanlagen und einer Leitwarte übertragen werden.

Insbesondere können Umweltdaten von zu der zu inspizierenden Windkraftanlage luvseitig angeordneten Windkraftanlagen verwendet werden. Insbesondere können Böeninformationen verwendet werden, um aktuelle Steuerungsinformationen zu variieren, um beispielsweise auf nahende Böen reagieren zu können.

Gemäß einem Ausführungsbeispiel wird vorgeschlagen, dass der Prozessor zum Ausgeben von Anlagenparameter für die Windkraftanlage über die Anlagenschnittstelle eingerichtet ist. Insbesondere können die Anlagenparameter von den Umweltdaten und/oder den Betriebsparametern abhängig sein.

Hierbei ist insbesondere eine Positionierung der Windkraftanlage, insbesondere des Azimutwinkels und/oder des Pitchwinkels relativ zu einer Windrichtung und einem Sonnenstand sinnvoll. Basierend auf den eingestellten Anlagenparametern kann ein Flugpfad so eingestellt werden, dass dieser mit definierten, einzustellenden Parametern entlang der Windkraftanlage verläuft. Dabei kann beispielsweise die Sonne auf der der Aufnahmerichtung des Sensors abgewandten Seite liegt. Dann kann mit der Lichtquelle innerhalb einer sich hinter der Sensorebene wölbenden Halbkugel eine optimierte Beleuchtungssituation für die Inspektion geschaffen werden. Ebenso kann die Positionierung des Inspektionsgeräts so gesteuert werden, dass ein Schattenwurf auf die Windkraftanlage bzw. die Rotorblätter vermieden wird.

Der Blickwinkel der Kamera kann so sein, dass er in eine der Sonnenposition abgewandte Richtung zeigt. Durch Einstellung des Azimutwinkels der Windkraftanlage kann diese in eine solche Position gedreht werden, dass das Inspektionsgerät im Wesentlichen zwischen der Lichtquelle und zumindest einem Rotorblatt angeordnet ist. Vorzugsweise ist das Inspektionsgerät zwischen der Lichtquelle und der Windkraftanlage angeordnet. Eine Positionierung genau zwischen Lichtquelle und Rotorblatt ist streng genommen wegen des Schattenwurf unerwünscht.Vielmehr sollte sich die Lichtquelle innerhalb einer Halbkugel mit unendlichem Durchmesser befinden, deren Symmetrieachse die direkte Verbindung zwischen Aufnahmensensor und aufzunehmender Blattoberfläche ist. So ist es möglich, zunächst den Azimutwinkel und gegebenenfalls auch den Pitchwinkel abhängig von Umweltdaten, beispielsweise dem Sonnenstand und/oder der Windrichtung so einzustellen, dass das Inspektionsgerät, wenn es sich wie oben beschrieben positioniert ist, auch auf der Luvseite der einzelnen Rotorblätter ist. Dies führt zu einer optimalen Aufnahmebedingung bei gleichzeitig weniger Turbulenzen.

Gemäß einem Ausführungsbeispiel ist das Inspektionsgerät eine Flugdrohne, insbesondere ein Mono- oder Multicopter. Auch kann das Inspektionsgerät ein senkrechtstart- und schwebefähiges VToL-Fluggerät mit Tragflächen zur Auftriebserzeugung sein. Schließlich ist es möglich, dass das Inspektionsgerät ein an der Windkraftanlage fest oder auf einem schwenkbaren Arm befestigter Tracker ist. Hierbei kann beispielsweise ein an der Gondel oder dem Turm schwenkbar angeordneter Arm vorgesehen sein, an dessen Ende ein Gimbal-Tracker angeordnet ist. An diesem Gimbal kann ein Sensor angeordnet sein, insbesondere eine Kamera. Durch die Schwenkbarkeit um zumindest zwei Achsen ist der Tracker somit gut geeignet, möglichst optimale Beleuchtungssituationen an der Windkraftanlage zu den Zeitpunkten ihres jeweiligen Auftretens auszunutzen.

Durch Auswertung der Windrichtung als auch der Windanströmgeschwindigkeiten ist es möglich, das Fluggerät so in dem Wind zu positionieren, dass ein stationärer Schwebeflug durch den die Tragflächen anströmenden Wind ermöglicht ist. Dies verringert die Leistungsaufnahme, da der Auftrieb zumindest teilweise durch den anströmenden Wind ermöglicht wird.

Auch ist erkannt worden, dass ein VToL-Fluggerät abhängig von der Windgeschwindigkeit oder anderen Wetterbedingungen unterschiedlich ausgestattet sein kann. Daher wird auch vorgeschlagen, dass entsprechend der Inspektionsaufgabe und den Umweltbedingungen die Tragflächen mit unterschiedlichen Abmessungen und/oder unterschiedlichen Profilierungen eingesetzt werden können. Auch ist erkannt worden, dass die Nutzung des Auftriebs durch den Wind nur bei Windgeschwindigkeiten über einer unteren Grenzgeschwindigkeit sinnvoll ist. Ergeben die Umweltdaten, dass kein ausreichend starker Wind vorherrscht oder ausreichend lange Transitstrecken mit entsprechender relativer Anströmung der Tragflächen vorgesehen sind, kann das Fluggerät auch ohne Tragflächen eingesetzt werden. Auch ist es möglich, dass in der Einsatzplanung zwischen einem Mono-/Multicopter und einem VToL-Fluggerät abhängig von den Umweltbedingungen gewählt wird. Die Auswahl kann dabei algorithmusgestützt automatisch erfolgen.

Auch beim Verlegen des Fluggeräts von einer ersten Windkraftanlage zu einer zweiten Windkraftanlage kann die Nutzung der Tragflächen sinnvoll sein. Die Flugwegplanung kann insbesondere auch derart sein, dass der bei dem Verlegen der zwischen den Windkraftanlagen anströmende Wind die Flugeigenschaften unterstützt und insbesondere einen ausreichenden Auftrieb gewährt. Somit kann eine Entlastung der Antriebsenergiespeicher und der Rotoren erfolgen. Außerdem können längere Flugzeiten ermöglicht werden.

Gemäß einem weiteren Ausführungsbeispiel wird vorgeschlagen, dass die Anlagenparameter Geoinformationen der Windkraftanlage enthalten und/oder dass die Betriebsparameter Geoinformationen des Inspektionsgerätes enthalten und dass der Prozessor abhängig von zumindest den Geoinformationen die Steuerungsinformationen erstellt.

Durch die Verwendung von Geoinformationen sowohl der Windkraftanlage als auch des Inspektionsgerätes, welche als Anlagenparameter und/oder Betriebsparameter dem Prozessor zur Verfügung gestellt werden können, kann der Prozessor die Steuerungsinformation jeweils an die aktuelle Position des Inspektionsgeräts anpassen. Anders als beim alleinigen Einsatz von Abstandssensoren muss keine permanente Erfassung und Korrektur des Abstands des Inspektionsgeräts zu der Windkraftanlage erfolgen. Dabei sei erwähnt, dass eine Kombination von Abstandssensoren und Geoinformationen sinnvoll sein kann. In Kenntnis der Geoinformationen ist es beispielsweise möglich, einzelne Areale der Rotorblattoberfläche bzw. auch jeden Punkt der Rotoroberfläche aus der Georeferenzierung des Anlagenstandortes sowie der Geometrie des Rotorblattes, beispielsweise aus 3D CAD Daten stammend, in ihrer Lage und Ausrichtung im Raum zu bestimmen. Sind darüber hinaus auch der Azimutwinkel, der Pitchwinkel und/oder der Rotorwinkel bekannt, so kann mit ausreichend hoher Genauigkeit ein Punkt auf der Rotorblattoberfläche bzw. dessen Position im Raum bestimmt werden. Wenn dann die Position des Inspektionsgerätes im Raum bekannt ist, kann daraus ein Abstand zwischen einem zu vermessenden Punkt/Areal auf der Rotorblattoberfläche und den Inspektionsgerät berechnet werden. Diese Abstandsinformation kann für die Berechnung des Flugweges sowie die Ausrichtung und Aufnahmeparametrierung genutzt werden.

Neben der Verwendung von Geoinformationen ist es natürlich auch möglich, dass alternativ oder kumulativ Abstandssensoren an dem Inspektionsgerät angeordnet sind. Mit Hilfe der Abstandssensoren lässt sich der Abstand des Inspektionsgerätes zu der Windkraftanlage bzw. einem Rotorblatt einstellen. Durch eine Kombination von Abstandssensoren und Geoinformationen ist eine redundante Kollisionsvermeidung möglich. Darüber hinaus kann ein dynamisches Geofencing erfolgen, in dem beispielsweise der Abstand des Inspektionsgerätes zu einem Rotorblatt stets ein Minium nicht unterschreiten darf.

Dieses dynamische Geofencing kann insbesondere abhängig von den Anlagendaten, insbesondere von dem Azimutwinkel und/oder dem Pitchwinkel sein. Werden Anlagendaten verändert, kann es notwendig sein die Position des Fluggeräts relativ zu der Windkraftanlage ebenfalls zu ändern. Somit ist es möglich, durch Verwendung der Anlagendaten, insbesondere des Pitchwinkels und des Azimutwinkels, Steuerungsinformationen betreffend die Position des Inspektionsgerätes zu ermitteln und an das Inspektionsgerät zu übermitteln.

Zur Bestimmung der Position im Raum kann ein GPS-Signal oder, zur präziseren Bestimmung, z.B. im Rahmen einer RTK-Vermessung, auch ein differentielles GPS-Signal genutzt werden. Darüber hinaus sind Glonass-, Beidou oder Galileosignale ebenfalls zur Ermittlung von Geoinformationen verwendbar.

Durch Kenntnis der Position des Inspektionsgerätes und der Position eines Rotorblattes, insbesondere zu jedem Zeitpunkt, ist es möglich, einen Auslösezeitpunkt eines Sensors mit einem Durchgang eines Rotorblattes im Blickfeld des Sensors zu synchronisieren. Wenn die Drehgeschwindigkeit der Nabe und/oder der Nabenwinkel bekannt sind, so kann zu jedem Zeitpunkt die Position eines Rotorblattes bestimmt werden. Wenn darüber hinaus die Position des Inspektionsgerätes bekannt ist, sowie die Ausrichtung des Sensors, insbesondere sein Blickfeld, kann ein Aufnahmefenster des Sensors bestimmt werden. In diesem Aufnahmefenster sollte sich das zu inspizierende Rotorblatt zum Auslösezeitpunkt befinden. Es kann errechnet werden, wann dies der Fall ist, so dass das Auslösen mit dem Durchgang des Rotorblattes durch das Aufnahmefenster synchronisiert sein kann.

Darüber hinaus kann unter Verwendung von weiteren Informationen, beispielsweise den Umweltdaten, insbesondere die Beleuchtungssituation errechnet werden. Hieraus kann der notwendige Abstand des Inspektionsgerätes zu dem inspizierenden Rotorblatt bestimmt werden und in die Flugwegplanung einfließen. Es können vorab definierte Qualitätskriterien, beispielsweise eine vorab definierte maximale Auflösung bestimmt werden. Zur Erzielung dieser Qualitätskriterien können dann z.B. ein Zoomfaktor und/oder eine Belichtungszeit beeinflusst/eingestellt werden. Die Berechnung der Position des Inspektionsgerätes abhängig von diesen Qualitätskriterien kann sowohl in der Inspektionsgerätesteuerungseinrichtung erfolgen, als auch online innerhalb des Inspektionsgerätes selber.

Auch ist es möglich, dass alternativ oder kumulativ zu den Abstandssensoren und/oder den Geoinformationen ein optischer Sensor in dem Inspektionsgerät eine Referenz auf einem Rotorblatt detektiert. Insbesondere kann durch eine Laserprojektion auf das Rotorblatt und einen entsprechenden Reflektor eine Referenz für beispielsweise den Auslösezeitpunkt des Sensors bestimmt werden.

Neben der Positionsbestimmung mittels der oben genannten Methoden ist auch eine Positionsbestimmung beispielsweise auf Basis von Informationen zu einem Drahtlosnetz, beispielsweise einem WLAN- oder einem GSM-Netz möglich. Auch hierbei kann eine, wenn auch ungenauere Positionierungsinformation abgeleitet werden.

Gemäß einem Ausführungsbeispiel wird vorgeschlagen, dass der Prozessor zum Empfangen von Echtzeit-Daten über die Anlagenschnittstelle und/oder die Geräteschnittstelle eingerichtet ist. Hierdurch ist es möglich, Steuerungsinformationen, insbesondere für den Sensor abhängig von aktuellen Anlagendaten als auch Betriebsdaten einzustellen. Beispielsweise ist es möglich, eine Synchronisation des Aufnahmezeitpunkts des Sensors mit dem Blattdurchgang des Rotors durch das Aufnahmefenster des Sensors auf Basis von in Echtzeit an das Inspektionsgerät übermittelten Anlagendaten durchzuführen.

Auch ist es möglich, Betriebsinformationen und Sensorinformationen in Echtzeit per Drahtloskommunikation, beispielsweise WLAN, von dem Inspektionsgerät an eine Windkraftanlage zu übermitteln. Insbesondere können die Daten in Echtzeit gestreamt werden. Mit Hilfe der empfangenen Daten kann eine Auswertung nahezu in Echtzeit erfolgen. Auch können die Daten zu einer Zentrale weitergeleitet werden. Auch ist es möglich, die Kommunikation drahtlos oder drahtgebunden durchzuführen, insbesondere unter Verwendung eines Glasfaserkabels.

Wie bereits erläutert, ist es mit Hilfe der gegenständlichen Inspektionsgerätesteuerungsrichtung möglich, sowohl Flugwege als auch Flugzeiten, welche auch als Einsatzplanung verstanden werden können, zu berechnen. Die Berechnung kann automatisch insbesondere basierend auf Anlagendaten, Betriebsdaten und/oder Umweltdaten erfolgen.

Durch eine Berechnung von Flugwegen ist es möglich, vorab auch die Anlagedaten einzustellen, insbesondere abhängig vom Flugweg und der Flugzeit beispielsweise den Azimutwinkel, den Rotorwinkel und/oder den Pitchwinkel einer Windkraftanlage einzustellen. Auch ist diese Einstellung darüber hinaus abhängig beispielsweise von Umweltdaten, insbesondere einem Sonnenstand, einer Windrichtung oder einer Windstärke. Durch die vorab berechnete Flugstrecke unter Berücksichtigung von aktuellen und/oder zukünftigen Umweltdaten, Anlagedaten und/oder Betriebsdaten ist es möglich, die Flugstrecke zu reduzieren und/oder die Flugzeit pro Anlage möglichst gering zu halten.

Während der Planung des Flugweges kann die Beleuchtungssituation berücksichtigt werden. Hierbei ist es möglich, einen Einfallswinkel des Lichts von der Beleuchtungsquelle beispielsweise des Sonnenlichts auf die Rotorblattoberfläche vorab zu berechnen. Abhängig hiervon kann ein Flugzeitraum (z.B. die Tageszeit) als auch der Azimut- und/oder der Pitchwinkel eingestellt werden. Darüber hinaus ist der Flugweg einstellbar, so dass sich insbesondere das Inspektionsgerät bei einer Aufnahme bezüglich der Lichtquelle und der Windkraftanlage so platziert, dass eine optimale Beleuchtungssituation geschaffen ist. Insbesondere bei flachem Einfallswinkeln des Lichts von hinten bzw. von der Seite, insbesondere bei Streiflicht, ist es möglich, bereits kleine Oberflächeninhomogenitäten, beispielsweise Mikrorisse, fotografisch und ggf. auch fotometrisch zu erfassen.

Auch die Ausrichtung des Inspektionsgeräts bzw. die Blickrichtung eines Sensors in Richtung eines Rotorblattes kann vorab bestimmt werden. So kann ein Bildaufnahmewinkel relativ zur Blattlängsachse bzw. zur Sehne des Blattprofils in die Flugwegplanung mit einfließen, so dass ein definierter Bereich des Bildaufnahmewinkels eingehalten wird. Darüber hinaus kann auch eine Anlagenausrichtung anhand der Anlagenparameter bestimmt werden und als Anlagendaten ausgegeben werden.

Bei der Flugwegplanung ist es möglich, automatisch zu ermitteln, in welchem räumlichen Bereich relativ zu einem Rotorblatt das Inspektionsgerät positioniert werden kann. Insbesondere kann die Höhe des Inspektionsgeräts, die Position des Inspektionsgeräts und/oder der horizontale Abstand parallel und/oder senkrecht zur Rotorachse zur jeweils optimalen Aufnahme einzelner Bereiche eines Rotorblattes bestimmt werden.

Auch ist es möglich, eine Positionierung auf der Lee-Seite des Rotorblatts zu berechnen, bei der die Flugstabilität bzw. Bildqualität nicht unzulässig beeinträchtigt wird. Dies ist beispielsweise möglich, in dem Turbulenzen berechnet werden, welche insbesondere abhängig von der Windrichtung relativ zum Azimutwinkel der Windraftanlage sein kann. Hier können insbesondere Abschattungen durch den Turm bzw. das Fundament relevant sein. Durch Einstellung des Pitchwinkels der Rotorblätter lässt sich abhängig von der Windgeschwindigkeit, der Böen- und der Turbulenzen-Intensität auch eine Aufnahme von der Lee-Seite der einzelnen Rotorblätter aus durchführen. Insbesondere kann die Rotordrehgeschwindigkeit und/oder der Pitchwinkel so eingestellt werden, dass möglichst geringe Turbulenzen auftreten und somit ein Einsatzfenster für das Inspektionsgerät räumlich und zeitlich maximiert wird.

Bei der Flugwegplanung ist es auch möglich, Umweltinformationen, insbesondere Turbulenzen von zu der aktuell zu inspizierenden Windkraftanlage entfernt stehenden Windkraftanlagen zu berücksichtigen. Zur Reduzierung von Turbulenzen ist es möglich, dass einzelne Windkraftanlagen ausgehend vom Einsatzort des Inspektionsgerätes in luvseitiger Richtung leistungsreduziert betrieben werden. Hierdurch sind leeseitig dieser leistungsreduzierten Windkraftanlagen geringere Turbulenzen zu erwarten. Diese Steuerung der Leistungsreduzierung kann dabei auf Basis von modellierten oder gemessenen Erfahrungswerten automatisiert erfolgen. So ist es beispielsweise möglich, auf Basis von Echtzeitdaten des Inspektionsgerätes, beispielsweise großen Erschütterungen oder Lageänderung aufgrund von Turbulenzen oder auf Basis von Messungen mittels Turbulenzmessgeräten, Lidar, etc. die Einstellungen von luvseitigen Windkraftanlagen zu verändern.

Auch kann bei der Flugwegplanung eine Netzabdeckung durch ein Funknetz berücksichtigt werden. Räumliche und/oder zeitliche Abdeckungen von drahtlosen Signalübertragungsstrecken, sei es WLAN, Mobilfunk, UHF, VHF oder dergleichen im Bereich einer Windkraftanlage können für die Flugroutenplanung berücksichtigt werden. Dabei können Reichweiten und Abschattungseffekte durch feste und mobile Strukturen berücksichtigt werden.

Auch kann ein zukünftiger Status einer Windkraftanlage aufgrund von Wetter, Wartung oder Betriebsrestriktionen für die Flugzeitplanung berücksichtigt werden. Insbesondere kann bei einer ohnehin vorgenommenen Wartung eine Inspektion besonders einfach durchgeführt werden, was für die Berechnung des Flugzeitplans relevant sein kann.

Ein weiteres, nicht beanspruchtes Beispiel ist ein Inspektionsgerät. Dieses Inspektionsgerät wird automatisch durch die Inspektionsgerätesteuerungseinrichtung mit Steuerungsinformationen versorgt, welche insbesondere Flugzeiten und Flugwegpläne beinhalten kann.

An dem Inspektionsgerät kann gemäß einem Ausführungsbeispiel zumindest ein Sensor, vorzugsweise ein bildgebender Sensor vorgesehen sein. Die Ausrichtung des Sensors kann abhängig von den Steuerungsinformationen erfolgen, so dass der Sensor insbesondere in Richtung der Windkraftanlage ausrichtbar ist.

Ein Sensor kann insbesondere ein Fotosensor sein, es ist jedoch auch möglich, andere Sensoren zum Beispiel Infrarotsensoren, Lasersensoren, Lidar- oder Radarsensoren, Teraherzsensoren, Röntgensensoren, Ultraschallsensoren (bei denen ein Kontakt zwischen Sensor und Rotorblatt notwendig sein kann) sowie weitere passive und/oder aktive Sensoren zum berührungslosen Inspizieren, insbesondere zum berührungslosen Erfassen von reflektierter Strahlung (z.B. auch für Shearografie) zu verwenden.

Die Sensordaten können in dem Inspektionsgerät quasi in Echtzeit verarbeitet und kodiert werden.

Auch ist es möglich, dass die von den Sensoren erfassten Daten fotografisch, fotometrisch oder fotogrammetrisch ausgewertet werden. Durch Verwendung von Maßstabsinformationen oder Referenzpunkten oder Reflektoren am Rotorblatt kann eine fotogrammetrische Auswertung der Blattgeometrie erfolgen.

Der Einsatz von künstlichen Beleuchtungsquellen, insbesondere beim Einsatz in Dunkelheit oder bei geringer Sonneneinstrahlung ist möglich. Die Ausrichtung der Lichtquelle in Kombination mit dem Pitchwinkel und dem jeweiligen Nabenwinkel zur Aufnahmezeit kann berechnet werden, so dass optimale Beleuchtungsverhältnisse erzielt werden. Auch ist es möglich, dass eine zusätzliche Beleuchtungsquelle eine Strahlung mit Wellenlängen außerhalb des sichtbaren Lichts aussenden kann. Die zusätzliche Beleuchtungsquelle kann bodenbasiert oder ebenfalls fliegend sein. Auch ist es möglich, dass die zusätzliche Beleuchtungsquelle an dem Inspektionsgerät selbst angeordnet ist, oder als eigenständige Plattform, insbesondere Flugdrohne, eingesetzt wird. Auch ist es möglich, dass der Flugweg und/oder die Flugzeit zwischen der zusätzlichen Beleuchtungseinrichtung und dem Inspektionsgerät synchronisiert ist.

Wie bereits erläutert, können in den Steuerungsinformationen auch Steuerungsinformationen für den Sensor vorhanden sein. Insbesondere ein Auslösezeitpunkt, eine Belichtungszeit, eine Blende, eine Sensorausrichtung, eine Brennweite eines bildgebenden Sensors kann abhängig von den Steuerungsinformationen sein.

Auch erfolgt die Positionierung des Inspektionsgeräts relativ zu der Windkraftanlage durch die Steuerungsinformationen. Darüber hinaus kann eine autarke Positionierung des Inspektionsgeräts anhand von optischen Markierungen an der Windkraftanlage selbst erfolgen. Auch ist eine Kombination dieser beiden Positionierungen möglich.

Insbesondere der Abstand des Inspektionsgeräts bzw. dessen Sensor zu einem zu inspizierenden Rotorblatt kann relevant sein für die Einstellung des Sensors. Insbesondere für eine Fokuseinstellung eines Sensors kann eine Abstandsinformation relevant sein. Mit Hilfe der Information über einen relativen Abstand zwischen dem Inspektionsgerät und der Windkraftanlage ist es beispielsweise möglich, einen Autofokus einer Kamera zu unterstützen. Hierbei ist es möglich, den Suchbereich eines Autofokus einer Kamera möglichst eng einzugrenzen, indem die Abstandsinformation vorab dem Autofokus mitgeteilt wird und dieser nur noch in einem sehr engen Suchfeld fokussieren muss.

Ein weiterer Aspekt ist ein Verfahren zum Betreiben eines Inspektionsgeräts nach Anspruch 10.

Bei der Flugwegplanung ist es möglich, mehrere Windkraftanlagen nacheinander zu inspizieren. Durch Optimierung des Flugwegs, insbesondere abhängig von den Umweltdaten, ist es möglich, das Inspektionsgerät von einer ersten inspizierten Anlage zu einer zweiten inspizierten Anlage zu verlegen. Dabei erfolgt die Flugwegplanung vorzugsweise derart, dass eine Höhenänderung des Inspektionsgeräts möglichst reduziert ist, da dies zu einer geringeren Leistungsaufnahme und mithin zu einer längeren Flugdauer führt.

Auch ist es möglich, das Inspektionsgerät mit Schwimmkörpern zu versehen. Insbesondere können ohnehin vorhandene Hohlräume innerhalb des Fluggeräts wasserdicht sein, so dass diese Schwimmkörper bilden. Durch die Schwimmkörper wird im Falle einer Havarie verhindert, dass das Inspektionsgerät bei der Inspektion von Offshore-Anlagen untergeht. Schwimmkörper können insbesondere auch Tragflächen des Fluggeräts, soweit vorhanden, sein. Auch andere Strukturen können als wasserdichte Kammern ausgestaltet sein, so dass sie als Auftriebskörper dienen.

Ein Inspektionsgerät verfügt über Mittel zur Drahtloskommunikation. Insbesondere zum Empfangen von Steuerungsinformationen und zum Aussenden von Betriebsdaten und Sensordaten. Betriebsdaten können Sensordaten enthalten. Auch ist es möglich, dass ein Inspektionsgerät als Träger und/oder Relaisstation für die Datenübertragung eines anderen Inspektionsgerätes dient. Auch kann eine unmittelbare Übertragung der Daten zwischen dem Inspektionsgerät und einer festen oder mobilen Kommunikationsstruktur erfolgen. Eine mobile Kommunikationsstruktur kann beispielsweise ein Fahrzeug, ein Schiff oder ein bemanntes oder unbemanntes Fluggerät sein.

Bei der Flugwegplanung kann berücksichtigt werden, welche Relaisstationen und Drahtloskommunikationsverbindungen verfügbar sind, so dass ein Flugweg möglichst entlang von Flugkorridoren geplant wird, die eine Kommunikationsverbindung ermöglichen.

Um möglichst nur geringe Ausfallzeiten zu ermöglichen, wird vorgeschlagen, dass die Inspektionsgeräte möglichst an vielen ortsfesten Strukturen geladen werden können. Bei der Flugwegplanung ist es möglich, die Positionierung von Ladestationen zu berücksichtigen und somit während eines Inspektionsgangs die Inspektionsgeräte an Ladestationen zwischenzuparken. Solche Ladestationen können sowohl an Land als auch offshore an festen oder mobilen Strukturen eingerichtet sein.

Durch eine Berücksichtigung von aktuellen und/oder prognostizierten Umweltdaten in Echtzeit ist es möglich, Steuerungsinformationen an sich verändernde Umweltdaten zu adaptieren. Insbesondere bei sich schnell verändernden Wetterbedingungen kann es notwendig sein, das Inspektionsgerät zu landen. Hierfür wird vorgeschlagen, dass Landestrukturen on-shore oder off-shore zur Verfügung gestellt werden. Auch kann eine Flugwegplanung derart sein, dass ein Abstand zu einer Landestruktur einen maximalen Wert nicht überschreitet.

Auch können Bereichen für Brennweite, Belichtungszeit, etc. abhängig von Umgebungsbedingungen (insbesondere Beleuchtungsstärke und "Wackler" des Inspektionsgerätes, d.h. differentielle Änderungen von Position und Ausrichtung in allen drei Raumrichtungen / um alle Achsen) eingestellt werden.

Anhand festgelegter Parameterbereiche kann ein Plausibilitäts- bzw. Qualitätscheck unmittelbar nach der Aufnahme anhand der tatsächlichen Aufnahmedaten erfolgen, bei unakzeptablen Bedingungen (bspw. zu hohe Beschleunigungen für die eingestellte Belichtungszeit) kann eine Aufnahme verworfen werden.

Für die Einstellung der Belichtungszeit kann z.B. die maximal erwartete Geschwindigkeit und/oder Winkelgeschwindigkeit eines aufzunehmenden Punktes relativ zum Mittelpunkt des Aufnahmesensors verwendet werden. Diese kann sich z.B. aus der Drehgeschwindigkeit eines Rotorblatts und den überlagerten mittleren oder maximalen registrierten Beschleunigungen des Inspektionsgeräts auf Grund von Turbulenzen ergeben.

Das Inspektionsgerät kann mit einem oder mehreren Sensoren ausgestattet sein. Auch lassen sich die Sensoren austauschen, so dass eine Inspektion mit zunächst einem ersten Sensor durchgeführt wird und anschließend mit einem zweiten Sensor.

Diese und andere Aspekte werden nachfolgend anhand einer Ausführungsbeispiele zeigenden Zeichnung näher erläutert. In der Zeichnung zeigen:
- Fig. 1: schematisch ein System mit einer Inspektionsgerätesteuerungseinrichtung und einem Inspektionsgerät;
- Fig. 2: eine schematische Ansicht einer Windkraftanlage mit einem Inspektionsgerät;
- Fig. 3: eine schematische Ansicht eines Flugwegs eines Inspektionsgerätes entlang einer Windkraftanlage;
- Fig. 4: eine schematische Ansicht einer Positionierung eines Inspektionsgerätes an einem Rotorblatt;
- Fig. 5: eine schematische Ansicht einer Flugwegsplanung in einem Windpark.

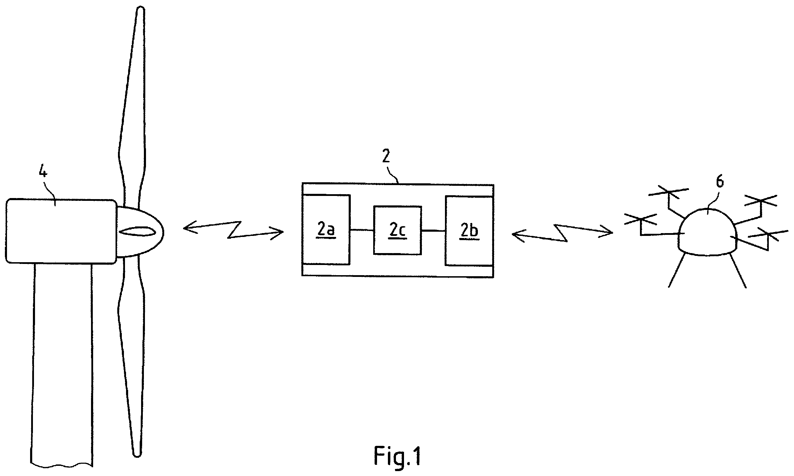

Fig. 1 zeigt eine Inspektionsgerätesteuerungseinrichtung 2 mit einer Anlagenschnittstelle 2a sowie einer Geräteschnittstelle 2b und einem Prozessor 2c. Es versteht sich, dass die Darstellung in Fig. 1 stark vereinfacht ist und die Inspektionsgerätesteuerungseinrichtung weitere Elemente umfassen kann, wie beispielsweise einen Speicher und weitere für die Berechnung von Flugwegen und Flugzeiten notwendige Komponenten. Die Inspektionsgerätesteuerungseinrichtung 2 kann mit Hilfe eines Softwareprodukts betrieben werden, welches die gegenständlichen Verfahren zumindest teilweise ausführt. DieInspektionsgerätesteuerungseinrichtung kann ganz oder teilweise auch an Bord des Inspektionsgerätes realisiert sein.

Fig. 1 zeigt darüber hinaus eine Windkraftanlage 4 sowie ein Inspektionsgerät 6.

Anstelle der Windkraftanlage 4 kann auch ein SCADA-System einer Windkraftanlage 4 oder eines Windparks verwendet werden.

Das Inspektionsgerät 6 kann insbesondere als Flugdrohne, beispielsweise als Multicopter oder als VToL-Senkrechtstarter mit festen oder beweglichen Tragflächen gebildet sein.

Fig. 1 zeigt, dass die Anlagenschnittstelle 2a zur Drahtloskommunikation mit der Windkraftanlage 4 eingerichtet ist. Es ist natürlich auch möglich, dass die Kommunikation drahtgebunden erfolgt oder auch eine Kombination aus einer drahtlosen Kommunikation und einer drahtgebundenen Kommunikation sein kann.

Ferner zeigt Fig. 1, dass die Geräteschnittstelle 2b eine Drahtloskommunikation mit dem Inspektionsgerät 6 aufbaut. Auch kann diese Kommunikation zumindest teilweise drahtgebunden sein. Die Kommunikation zwischen der Geräteschnittstelle 2b und dem Inspektionsgerät 6 kann auch über Relaisstationen erfolgen.

Über die Anlagenschnittstelle 2a werden insbesondere bidirektional Anlagedaten zwischen der Inspektionsgerätesteuerungseinrichtung 2 und der Windkraftanlage 4 ausgetauscht. So ist es möglich, Realtime-Daten als auch Prognosedaten zu der Windkraftanlage 4 an die Inspektionsgerätesteuerungseinrichtung 2 zu übermitteln. Auch ist es möglich, zur Beeinflussung des Betriebs der Windkraftanlage 4 von der Inspektionsgerätesteuerungseinrichtung 2 über die Anlagenschnittstelle 2a Anlagenparameter an die Windkraftanlage 4 zu übermitteln. Dies ermöglicht es, die Windkraftanlage in ihrem Betrieb zu beeinflussen, insbesondere Anlagenparameter wie Pitchwinkel, Azimutwinkel und/oder dergleichen.

Über die Geräteschnittstelle 2b werden von der Inspektionsgerätesteuerungseinrichtung 2 Steuerungsinformationen an das Inspektionsgerät 6 übermittelt. Steuerungsinformationen können insbesondere Flugwege, Flugzeiten, Sensorsteuerungsinformationen, Abstandsinformationen, Geoinformationen (z.B. auch Positionsinformationen weiterer fester oder mobiler Strukturen, die Mindestabstände bedingen oder als Landepunkte dienen können) oder dergleichen sein. Von dem Inspektionsgerät 6 können über die Geräteschnittstellen 2b Betriebsdaten in die Inspektionsgerätesteuerungseinrichtung 2 eingespeist werden. Diese Betriebsdaten sind insbesondere Realtime-Daten, d.h. in Echtzeit können Betriebsparameter des Inspektionsgerätes 6 an die Inspektionsgerätesteuerungseinrichtung 2 übermittelt werden.

Mit Hilfe des Prozessors 2c werden die Daten verarbeitet und entsprechende Anlagenparameter und/oder Steuerungsinformationen erstellt, die an die Windkraftanlage 4 bzw. das Inspektionsgerät 6 übermittelt werden.

Neben den Anlageparametern, Steuerungsinformationen und Betriebsparametern können auch Umweltdaten über eine nicht gezeigte Schnittstelle in die Inspektionsgerätesteuerungseinrichtung 2 eingespeist werden.

Die Inspektionsgerätesteuerungseinrichtung 2 bildet somit eine Echtzeitschnittstelle zwischen der Windkraftanlage 4 und dem Inspektionsgerät 6. Somit ist es möglich, sowohl eine Planung für den Einsatz des Inspektionsgerätes 6 abhängig von Prognosen, insbesondere über Wetterdaten zu erstellen, als auch in Echtzeit sowohl die Windkraftanlage 4 als auch das Inspektionsgerät 6 abhängig voneinander und/oder auch abhängig von Umweltdaten, Wartungs- und Einsatzplanungsinformationen für einzelne Windturbinenstandorte des Windparks, Strommarktdaten oder dergleichen zu steuern.

Zunächst wird mit Hilfe des Prozessors 2c ein Flugweg des Inspektionsgerätes 6 geplant. Dabei wird vorzugsweise die Sonnenposition als auch die Windrichtung berücksichtigt.

Durch geeignete Einstellung des Azimutwinkels ist es möglich, dass Inspektionsgerät 6 zwischen Sonne und Windkraftanlage im Luv der Windkraftanlage 4 zu positionieren. Die jeweilige Position eines Rotorblattes kann in Echtzeit an das Inspektionsgerät 6 übermittelt werden, so dass das Inspektionsgerät auf einem geeigneten Flugpfad geführt werden kann, bzw. bei drehendem Rotor eine Kamera oder ein sonstiger Sensor an dem Inspektionsgerät 6 zu einem exakten Zeitpunkt ausgelöst werden kann, wenn sich das entsprechende Rotorblatt durch das Sichtfeld des Sensors bewegt.

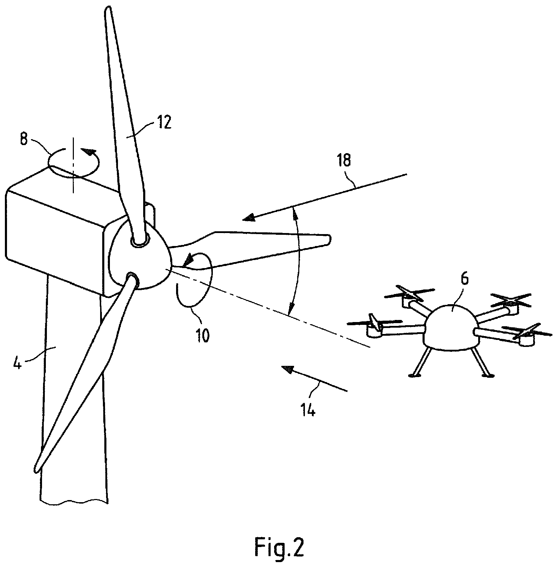

Eine mögliche Positionierung des Inspektionsgerätes 2 relativ zur Windkraftanlage 4 ist in Fig. 2 dargestellt. Fig. 2 zeigt die Windkraftanlage 4, deren Azimutwinkel 8 sowie deren Pitchwinkel 10 der Rotorblätter 12, welche sich aus dem aktuellen Betriebszustand ergeben, bzw. welche für eine bestmögliche Aufnahmequalität aktiv beeinflusst werden können.

Die Inspektionsgerätesteuerungseinrichtung 2 empfängt Umweltdaten, beispielsweise Informationen zu einer Windrichtung 14 sowie einem Einfallswinkel 18 der Sonne. Abhängig von der Windrichtung 14 sowie dem Einfallswinkel 18 wird der Azimutwinkel 8 eingestellt. Anschließend wird das Inspektionsgerät 6 luvseitig der Rotorblätter 12 positioniert.

Der Pitchwinkel 10 der Rotorblätter 12 kann beispielsweise in Fahnenposition gehen, so dass die Windkraftanlage trudelt. Dies gewirkt möglichst geringe Turbulenzen im Bereich der Rotorblätter 2. Mit Hilfe des Inspektionsgerätes 6 lässt sich nun jeweils ein Rotorblatt 12 inspizieren.

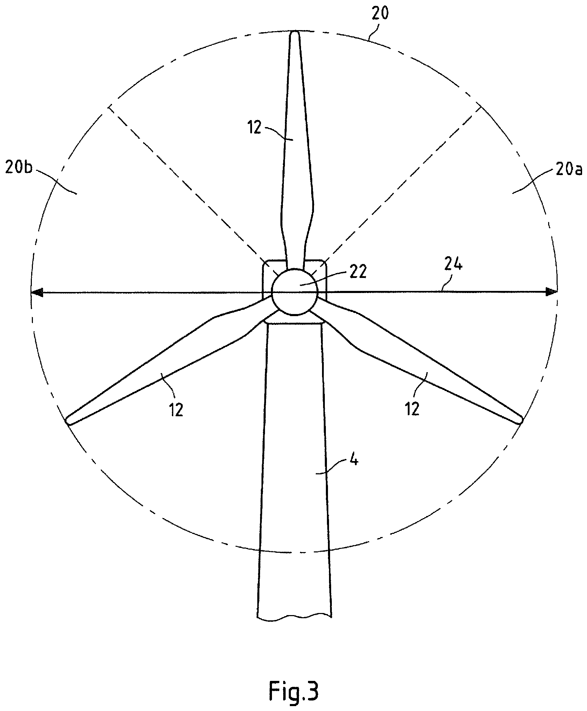

Fig. 3 zeigt einen beispielhaften Flugweg entlang einer Windkraftanlage 4. Hierbei kann der Rotorblattumfang 20 in zwei Kreissegmente 20a, b unterteilt werden. Die Rotorblätter 12 drehen sich um die Nabe 22 und durchlaufen dabei die beiden Kreissegmente 20a, b. Der Azimutwinkel 8 ist so eingestellt, dass der Wind vorzugsweise in die Zeichenebene hinein gerichtet ist. Durch einen Flugweg 24 ist es möglich, mit einer möglichst geringeren Bewegung des Inspektionsgerätes 6 sowohl alle Rotorblätter 12 zu inspizieren, als auch bei den jeweiligen Rotorblättern die Blattvorderkante und die Blatthinterkante jeweils auf Druck- und/oder Saugseite zu inspizieren.

Durch die geeignete Einstellung des Pitchwinkels 10 sowie durch geeignete Ausrichtung der Sensoreinheit ist es möglich, dass im Kreissegment 20a beispielsweise eine Blattsaugseite inspizierbar ist und im Kreissegment 20b dann die Blattdruckseite.

Zunächst wird das Inspektionsgerät 6 auf dem Flugweg 24 in das Kreissegment 20a bewegt. Die Rotorblätter rotieren und durchlaufen alle das Kreissegment 20a. Durch eine geeignete Ansteuerung in Kenntnis der Drehgeschwindigkeit der Windkraftanlage bzw. der Nabe 22 und mithin der jeweiligen Position eines Rotorblatts 12 kann das Inspektionsgerät 6 jeweils zu bestimmten Zeitpunkten eine Aufnahme oder eine sonstige Sensorinspektion jeweils eines der Rotorblätter 12, insbesondere einer Blattdruckseite, durchführen. Durch Kenntnis der Rotorblattpositionen sowie der Position und Ausrichtung des Inspektionsgerätes bzw. der Sensoreinheit ist es möglich, die jeweiligen erfassten Werte jeweils einem Rotorblatt und einer Position auf dessen Längsachse zuzuordnen. Nachdem alle drei Rotorblätter 12 im Kreissegment 20a inspiziert wurden, wird das Inspektionsgerät 6 entlang des Flugwegs 24 in das Kreissegment 20b bewegt. Hierbei wird bevorzugt keine Höhenänderung erfolgen, was zur Verlängerung der Flugzeit beiträgt.

Anschließend wird, wie schon im Kreissegment 20a im Kreissegment 20b jedes einzelne Rotorblatt 12 inspiziert, wobei durch eine geeignete Einstellung des Pitchwinkels 10 dann beispielsweise eine Blattdruckseite inspiziert werden kann.

Durch geeignete Geoinformationen als auch Geometriedaten der Rotorblätter 12 ist es möglich, einen Abstand 26 zwischen einem Inspektionsgerät 6 und einem Rotorblatt 12 in der Flugwegplanung zu berücksichtigen.

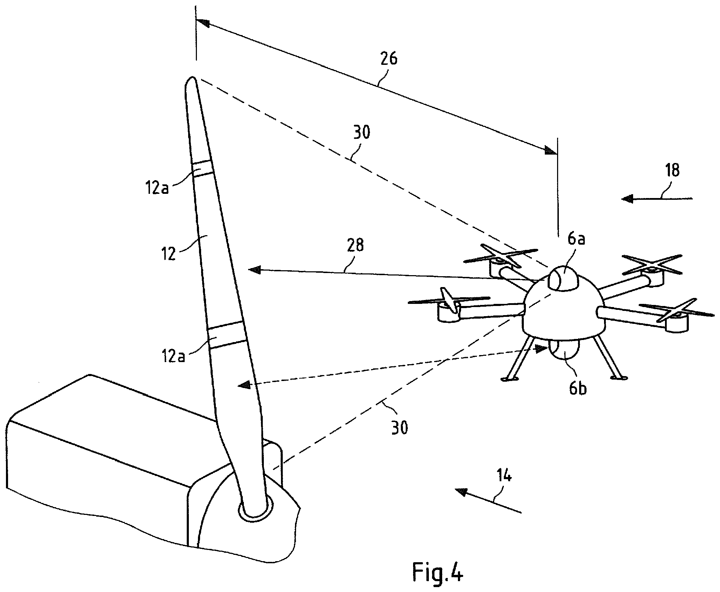

Fig. 4 zeigt, dass das Inspektionsgerät 6 einen Abstand 26 von dem Rotorblatt 12 hat. Dieser Abstand 26 ist vorzugsweise vorberechnet. Im Betrieb sind die Geodaten des Inspektionsgeräts 6 bekannt. Wenn darüber hinaus die Geodaten der Windkraftanlage 4 bekannt sind und mithin die des Rotorblatts 12, lässt sich ein relativer Abstand 26 zwischen dem Inspektionsgerät und 6 und dem Rotorblatt 12 bestimmen. Der Flugweg 24 wird dann so eingestellt, dass dieser Abstand 26 eingehalten wird.

An dem Inspektionsgerät 6 kann ein Sensor 6a, beispielsweise eine Kamera und ein Abstandssensor 6b, angeordnet sein.

Es ist möglich, dass auf dem Rotorblatt 12 Markierungen 12a, beispielsweise Reflektoren, angeordnet sind. Mit Hilfe des Abstandssensor 6b können diese Markierungen 12a ausgelesen werden und somit alternativ oder kumulativ der Abstand 26 des Inspektionsgeräts 6 zum Rotorblatt 12 bestimmt werden.

Ferner ist zu erkennen, dass der Sensor 6a, beispielsweise eine Kamera, eine Blickrichtung 28 und einen Blickwinkel 30 hat. Beide können unabhängig von der Ausrichtung des Inspektionsgerätes eingestellt und ggf. entlang des Flugpfades kontinuierlich verändert werden. Dies ermöglicht eine ideale Ausrichtung des Sensors im Hinblick auf einen energieminimierten Flugpfad bei vorgegebenen Randbedingungen für die Qualität der Aufnahmen.

Der Flugweg 24 ist so geplant, dass sowohl Windrichtung 14 als auch Einfallswinkel 18 derart sind, dass sich das Inspektionsgerät 6 luvseitig des Rotorblatts 12 befindet und sich die Lichtquelle auf der dem Aufnahmeobjektiv abgewandten Seite der Ebene des Aufnahmesensors befindet.

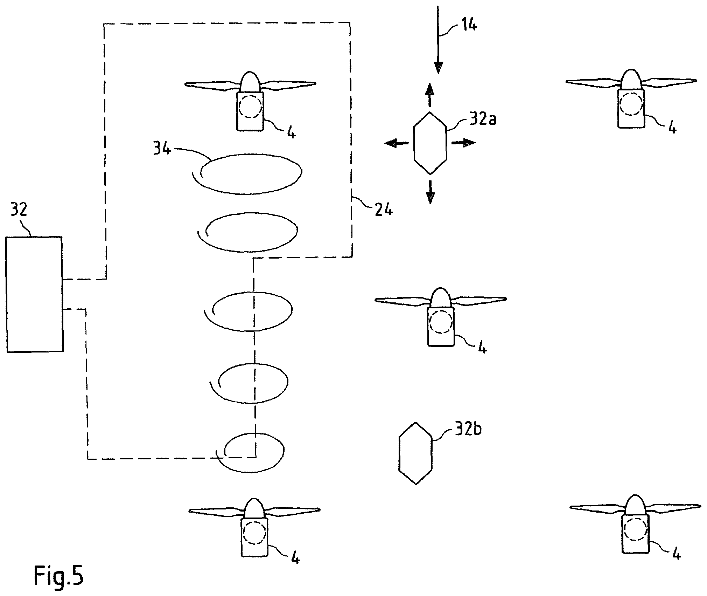

Fig. 5 zeigt eine mögliche Flugwegplanung mit einem Flugweg 24 entlang einer Mehrzahl an Windkraftanlagen 4 in einem Windpark. Abhängig von einer Windrichtung 14 wird das Inspektionsgerät 6 von einer Startrampe 32 aus (bspw. Lokalisiert auf dem Umspannwerk des Windparks) gestartet und fliegt zunächst in Richtung einer bestimmten Windkraftanlage 4. Dabei wird das Inspektionsgerät 6 so vor der Windkraftanlage 4 positioniert, dass eine Beleuchtungssituation optimiert ist, wie zuvor beschrieben. Anschließend wird unter Berücksichtigung der Windrichtung 14 der Flugweg 24 so geplant, dass die nächste Windkraftanlage 4 mit möglichst minimalem Energieeinsatz angeflogen werden kann.

In der Fig. 5 ist gezeigt, dass dies die Windkraftanlage 4 unten links ist. Durch die Windkraftanlage 4 oben links werden Wirbel bzw. Turbulenzen 34 erzeugt, die die Inspektion der zweiten Windkraftanlage 4 durch das Inspektionsgerät 6 beeinflussen können. Durch Online-Auswertung der Betriebsdaten, Steuerinformationen, Umweltdaten und Anlagendaten ist es möglich, dass die Anlagendaten so beeinflusst werden, dass die Turbulenzen 34 minimiert werden.

Auch sind in Fig. 5 mobile und stationäre Ausweichlandeplätze 32a, 32b dargestellt Diese können in der Flugwegplaung berücksichtigt werden und ggf. bei Fehlern oder zum Zwischentanken (Aufladen) genutzt werden.

### Bezugszeichenliste

- 2: Inspektinosgerätesteuerungseinrichtung
- 2a: Anlagenschnittstelle
- 2b: Geräteschnittstelle
- 2c: Prozessor
- 4: Windkraftanlage
- 6: Inspektionsgerät
- 6a: Kamera
- 6b: Abstandssensor
- 8: Azimutwinkel
- 10: Pitchwinkel
- 12: Rotorblatt
- 14: Windrichtung
- 18: Einfallswinkel
- 20: Umfang
- 20a,b: Kreissegment
- 22: Nabe
- 24: Flugweg
- 26: Abstand
- 28: Blickrichtung
- 30: Blickwinkel
- 32: Startpunkt
- 34: Turbulenzen

## Patentansprüche

1. Inspektionsgerätsteuerungseinrichtung für ein Inspektionsgerät einer Windkraftanlage mit
- einer Anlagenschnittstelle eingerichtet zur Kommunikation mit einer Windkraftanlagensteuerung der Windkraftanlage, und
- einer Geräteschnittstelle eingerichtet zur Kommunikation mit dem Inspektionsgerät,
wobei
- ein Prozessor abhängig von über die Anlagenschnittstelle empfangenen Anlagenparametern der Windkraftanlage Steuerungsinformationen für das Inspektionsgerät erstellt und die Steuerungsinformationen über die Geräteschnittstelle ausgibt,
**dadurch gekennzeichnet,**
- **dass** der Prozessor abhängig von über die Anlagenschnittstelle empfangenen Anlagenparameter Steuerungsinformationen für eine weitere fliegende Plattform mit Lichtquelle ausgibt.

2. Inspektionsgerätesteuerungseinrichtung nach Anspruch 1,
**dadurch gekennzeichnet,**
- **dass** die Anlagenschnittstelle zum Empfangen von Anlagenparametern der Windkraftanlage oder eines Windparks eingerichtet ist und
- **dass** der Prozessor abhängig von zumindest den Anlagenparametern die Steuerungsinformationen erstellt.

3. Inspektionsgerätesteuerungseinrichtung nach einem der vorangehenden Ansprüche,
**dadurch gekennzeichnet,**
- **dass** die Geräteschnittstelle zum Empfangen von Betriebsparametern des Inspektionsgerätes eingerichtet ist und
- **dass** der Prozessor abhängig von zumindest den Betriebsparametern die Steuerungsinformationen erstellt.

4. Inspektionsgerätesteuerungseinrichtung nach einem der vorangehenden Ansprüche,
**dadurch gekennzeichnet,**
- **dass** die Inspektionsgerätesteuerungseinrichtung zum Empfangen von Umweltdaten eingerichtet ist und
- **dass** der Prozessor abhängig von zumindest den Umweltdaten die Steuerungsinformationen erstellt.

5. Inspektionsgerätesteuerungseinrichtung nach einem der vorangehenden Ansprüche,
**dadurch gekennzeichnet,**
- **dass** der Prozessor zum Ausgeben von Anlagenparametern für die Windkraftanlage über die Anlagenschnittstelle eingerichtet ist, wobei die Anlagenparameter insbesondere von den Umweltdaten und/oder den Betriebsparametern abhängig sind.

6. Inspektionsgerätesteuerungseinrichtung nach einem der vorangehenden Ansprüche,
**dadurch gekennzeichnet,**
- **dass** das Inspektionsgerät eine Flugdrohne, insbesondere ein Multicopter oder ein schwebefähiges VTOL Fluggerät mit Tragflächen oder ein an der Windkraftanlage fest oder schwenkbar befestigter Tracker ist.

7. Inspektionsgerätesteuerungseinrichtung nach einem der vorangehenden Ansprüche,
**dadurch gekennzeichnet,**
- **dass** die Anlagenparameter Geoinformationen der Windkraftanlage enthalten und/oder dass die Betriebsparameter Geoinformationen des Inspektionsgerätes enthalten ist und dass der Prozessor abhängig von zumindest den Geoinformationen die Steuerungsinformationen erstellt.

8. Inspektionsgerätesteuerungseinrichtung nach einem der vorangehenden Ansprüche,
**dadurch gekennzeichnet,**
- **dass** der Prozessor zum Empfangen von _Echtzeit-Daten über die Anlagenschnittstelle und/oder die Geräteschnittstelle eingerichtet ist.

9. Inspektionsgerätesteuerungseinrichtung nach einem der vorangehenden Ansprüche,
**dadurch gekennzeichnet,**
- **dass** die Steuerungsdaten Flugwegpläne und/oder Flugzeiten enthalten.

10. Verfahren zum Betreiben einer Inspektionsgerätsteuerungseinrichtung für ein Inspektionsgerät einer Windkraftanlage umfassend
- Austauschen von Anlagenparametern der Windkraftanlage mit einer Windkraftanlagensteuerung, und
- Austauschen von Steuerungsinformationen mit dem Inspektionsgerät, wobei
- abhängig von den Anlagenparametern und/oder Umweltparametern Steuerungsinformationen für das Inspektionsgerät erstellt und ausgegeben werden und/oder
- dass abhängig von den Inspektionsgeräteparametern und/oder Umweltparametern Steuerungsinformationen für die Windkraftanlage erstellt und ausgegeben werden,
**dadurch gekennzeichnet**
- **dass** abhängig von den Anlagenparametern Steuerungsinformationen für eine weitere fliegende Plattform mit Lichtquelle ausgegeben wird.

## Claims

1. An inspection control device for an inspection device of a wind turbine having
- a turbine interface arranged for communication with a wind turbine control system of the wind turbine, and
- a device interface arranged for communication with the inspection device,
wherein
- a processor generates control information for the inspection device and outputs the control information via the turbine interface in dependence on turbine parameters of the wind turbine received via the turbine interface
**characterized in that**
the processor outputs control information for another flying platform with a lighting source depending on the turbine parameters received via the turbine interface.

2. Inspection device control device according to claim 1,
**characterized in that**
- the turbine interface is arranged to receive turbine parameters from the wind turbine or a wind farm and
- the processor generates the control information depending on at least the turbine parameters.

3. Inspection device control device according to one of the preceding claims,
**characterized in that**
- the device interface is arranged to receive operating parameters of the inspection device, and
- the processor generates the control information depending on at least the operating parameters.

4. Inspection device control device according to one of the preceding claims,
**characterized in that**
- the inspection device control device is arranged to receive environmental data, and
- the processor generates the control information depending on at least the environmental data.

5. Inspection device control device according to one of the previous claims,
**characterized in that**
- the processor is arranged to output turbine parameters for the wind turbine via the turbine interface, the turbine parameters being dependent in particular on the environmental data and/or the operating parameters.

6. Inspection device control device according to one of the previous claims,
**characterized in that**
- the inspection device is a flying drone, in particular a multicopter or a VTOL aircraft with wings, or a tracker fixed or pivotably attached to the wind turbine.

7. Inspection device control device according to one of the previous claims,
**characterized in that**
- the turbine parameters contain geoinformation of the wind turbine and/or **in that** the operating parameters contain geoinformation of the inspection device, and **in that** the processor generates the control information as a function of at least the geoinformation.

8. Inspection device control device according to one of the preceding claims,
**characterized in that**
- the processor is arranged to receive real-time data via the turbine interface and/or the device interface.

9. Inspection device control device according to one of the previous claims,
**characterized in that**
- the control data contain in particular flight routes and/or flight times.

10. A method of operating an inspection apparatus control device for a wind turbine inspection apparatus comprising
- exchange of wind turbine parameters with a wind turbine control system, and
- exchange control information with the inspection device, wherein
- control information for the inspection device is generated and output, depending on the turbine parameters and/or environmental parameters, and/or
- that control information for the wind turbine is generated and output depending on the inspection device parameters and/or environmental parameters
**characterized in that.**
- control information for another flying platform with a lighting source depending on the turbine parameters are output.

## Revendications

1. Dispositif de commande d'appareil d'inspection pour un appareil d'inspection d'une éolienne comprenant :
- une interface d'installation conçue pour la communication avec une commande de l'éolienne, et
- une interface d'appareil conçue pour la communication avec l'appareil d'inspection,
où,
- en fonction de paramètres d'installation de l'éolienne reçus via l'interface de l'installation, un processeur produit des informations de commande pour l'appareil d'inspection et fournit les informations de commande via l'interface de l'appareil,
**caractérisé**
- **en ce que** le processeur, en fonction de paramètres d'installation reçus via l'interface de l'installation, fournit des informations de commande pour une autre plateforme volante comportant une source de lumière.

2. Dispositif de commande d'appareil d'inspection selon la revendication 1,
**caractérisé**
- **en ce que** l'interface de l'installation est conçue pour la réception de paramètres d'installation de l'éolienne ou d'un parc éolien, et
- **en ce que** le processeur produit les informations de commande en fonction au moins des paramètres de l'installation.

3. Dispositif de commande d'appareil d'inspection selon l'une des revendications précédentes,
**caractérisé**
- **en ce que** l'interface de l'appareil est conçue pour la réception de paramètres de fonctionnement de l'appareil d'inspection, et
- **en ce que** le processeur produit les informations de commande en fonction au moins des paramètres de fonctionnement.

4. Dispositif de commande d'appareil d'inspection selon l'une quelconque des revendications précédentes,
**caractérisé**
- **en ce que** le dispositif de commande de l'appareil d'inspection est conçu pour la réception de données sur l'environnement, et
- **en ce que** le processeur produit les informations de commande en fonction au moins des données sur l'environnement.

5. Dispositif de commande d'appareil d'inspection selon l'une quelconque des revendications précédentes,
**caractérisé**
- **en ce que** le processeur est conçu pour fournir, via l'interface de l'installation, des paramètres d'installation pour l'éolienne, où les paramètres d'installation sont fonction en particulier des données sur l'environnement et/ou des paramètres de fonctionnement.

6. Dispositif de commande d'appareil d'inspection selon l'une quelconque des revendications précédentes,
**caractérisé**
- **en ce que** l'appareil d'inspection est un drone aérien, en particulier un multicoptère ou un engin volant pouvant planer, ledit engin volant étant à décollage et à atterrissage vertical - VTOL - et ayant des surfaces portantes, ou bien ledit appareil d'inspection est un tracker fixé sur l'éolienne de manière solidaire ou de façon à pouvoir pivoter.

7. Dispositif de commande d'appareil d'inspection selon l'une quelconque des revendications précédentes,
**caractérisé**
- **en ce que** les paramètres de l'installation contiennent des informations géospatiales de l'éolienne et/ou en ce que les paramètres de fonctionnement contiennent des informations géospatiales de l'appareil d'inspection, et en ce que le processeur produit les informations de commande en fonction au moins des informations géospatiales.

8. Dispositif de commande d'appareil d'inspection selon l'une quelconque des revendications précédentes,
**caractérisé**
- **en ce que** le processeur est conçu pour la réception de données en temps réel, via l'interface de l'installation et/ou via l'interface de l'appareil.

9. Dispositif de commande d'appareil d'inspection selon l'une quelconque des revendications précédentes,
**caractérisé**
- **en ce que** les données de commande contiennent des plans de vol et/ou des temps de vol.

10. Procédé de fonctionnement d'un dispositif de commande d'appareil d'inspection pour un appareil d'inspection d'une éolienne, ledit procédé consistant :
- à échanger des paramètres d'installation de l'éolienne avec une commande de l'éolienne, et
- à échanger des informations de commande avec l'appareil d'inspection,
où
- des informations de commande pour l'appareil d'inspection sont produites et fournies en fonction des paramètres de l'installation et/ou en fonction des paramètres sur l'environnement et/ou
- ledit procédé se **caractérise par le fait que** des informations de commande pour l'éolienne sont produites et fournies en fonction des paramètres de l'appareil d'inspection et/ou en fonction des paramètres sur l'environnement,
**caractérisé**
- **en ce que** des informations de commande pour une autre plateforme volante comportant une source de lumière sont fournies en fonction des paramètres de l'installation.
